(19) **Europäisches Patentamt**
**European Patent Office**
**Office européen des brevets**

(11) **EP 4 746 338 A1**

(12) **EUROPEAN PATENT APPLICATION**
published in accordance with Art. 153(4) EPC

(43) Date of publication:
**20.05.2026 Bulletin 2026/21**

(21) Application number: **23944980.4**

(22) Date of filing: **18.12.2023**

(51) International Patent Classification (IPC):
**H04L 9/08** $^{(2006.01)}$ **G01J 4/00** $^{(2006.01)}$

(86) International application number:
**PCT/ES2023/070757**

(87) International publication number:
**WO 2025/012492 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.07.2023 ES 202330575**

(71) Applicant: **Consejo Superior De Investigaciones
Científicas
(CSIC)
28006 Madrid (ES)**

(72) Inventors:
• **LLANOS VELASCO, Adrián**
**28006 Madrid (ES)**
• **ARTEAGA DÍAZ, Pablo**
**28006 Madrid (ES)**
• **FERNÁNDEZ MARMOL, Verónica**
**28006 Madrid (ES)**

(74) Representative: **Pons IP
Glorieta Rubén Darío 4
28010 Madrid (ES)**

(54) **SYSTEM AND METHOD FOR ENCODING AND CORRECTING BB84 PROTOCOL POLARISATION STATES**

(57) The present invention relates to a system for encoding and correcting BB84 protocol polarisation states that implements a method for measuring polarisation error based on performing said measurement prior to the information transmission step, applicable to any system where quantum key distribution (QKD) is to be implemented.

EP 4 746 338 A1

**Description**

**OBJECT OF THE INVENTION**

The present invention belongs to the field of quantum communications relating to the field of quantum key distribution (QKD), specifically, to the BB84 protocol.
Specifically, the invention relates to a system and method for encoding and correcting BB84 protocol polarisation states.

**BACKGROUND OF THE INVENTION**

QKD (quantum key distribution) is a quantum cryptography protocol used for the secure distribution of cryptographic keys between two parties wishing to communicate securely. Quantum cryptography uses principles of quantum mechanics to ensure communication security.
In a system using this type of protocol, cryptographic keys are generated through the use of properties such as superposition, quantum entanglement, or the non-cloning principle, which allow keys with unconditional security to be exchanged. In other words, security does not depend on the calculating power of potential adversaries. This is because any attempt to intercept or measure the photons during transmission disturbs the quantum state, which can be easily detected, allowing the presence of an unauthorised third party to be detected and ensuring the integrity of the cryptographic key. Knowing the manner in which quantum states have been altered, the information an attacker has been able to access is known. By using this information in the post-processing of the key, the transmitter and receiver will be able to share an identical key, which the attackers have no knowledge about.
The method involves sending photons with information encoded in their quantum state, such as their polarisation state, from a transmitter through a communication channel. A receiver performs measurements on the quantum states of the received photons and, through comparison of the results and post-processing thereof with the transmitter, a shared cryptographic key is established.
Specifically, the QKD BB84 protocol uses four polarisation states to encode the key information. These four states are divided into two orthogonal state bases, the rectilinear base and the diagonal base. The rectilinear base encodes the information of a binary zero by means of linear polarisation at 0°, and the binary one by means of linear polarisation at 90°. The diagonal base is rotated 45° with respect to the rectilinear base, so that linear polarisation at 45° encodes binary zero and linear polarisation at 135° (-45°) encodes binary one. The key transmitter sends a random sequence of ones and zeros by randomly selecting one of the bases for each bit. To make the system resistant to attacks on pulses containing more than one photon, the decoy-state protocol is often used.

In this protocol, the pulse intensities of the optical signal are randomly selected, such that an attack on pulses of more than one photon will alter the statistics marked by this random selection and become detectable.
Systems implementing said protocol are known in the state of the art. For example, one document describes an optical polarisation correction system for QKD, consisting of an "Alice" transmitter and a "Bob" receiver. The communication link between Alice and Bob has a quantum channel and a classical channel. The single photon signal, after being adjusted by a polarisation controller in Alice, is sent to Bob through the quantum channel. A polarisation controller drive unit adjusts the polarisation of the single photon by changing the polarisation controller parameters based on measurements performed at Bob. However, this method involves transmission delays, inter alia, due to the need to spend time correcting the error after signal acquisition.

**DESCRIPTION OF THE INVENTION**

The subject of the present invention is a system and method for encoding and correcting BB84 protocol polarisation states and solving the problems existing in the state of the art.
This system and method achieves the measurement of the polarisation error by performing said measurement prior to the step of information transmission, i.e. at the transmitter.
With respect to the applications of the present invention, it is applicable to any system where quantum key distribution (QKD) is to be implemented. For example, it is useful in the fields of banking, defence, government, satellites or the Internet of Things (IoT), among many others.
As described above, the BB84 protocol uses four polarisation states to encode the key information transmitted between a transmitter and a receiver. These four states are divided into two orthogonal state bases, a rectilinear base and a diagonal base. The rectilinear base encodes the information of a binary zero by means of linear polarisation at 0°, and the binary one by means of linear polarisation at 90°. The diagonal base is rotated 45° with respect to the rectilinear base, so that linear polarisation at 45° encodes binary zero and linear polarisation at 135° (-45°) encodes binary one. The key transmitter sends a random sequence of ones and zeros by randomly selecting one of the bases for each bit.
The system of the invention, in a first embodiment, comprises one or more light sources configured to generate optical pulses.
It also comprises a processing and control module, which is connected to the light sources and is configured to modulate the optical pulses generated, i.e. to modify the power of said optical pulses. The processing and control module may comprise a processor, a digital-to-analogue converter and a signal generator.
The system also comprises one or more variable attenuators, each connected to one of the light sources and to the processing and control module. The variable attenuators are configured to receive the optical pulses generated and apply thereto an attenuation previously determined by the processing and control module.

Similarly, the system may comprise one or more polarisers connected to the variable attenuators and configured to polarise the attenuated optical pulses.

Next, one or more fibre optic beam splitters configured to split the polarised optical pulses coming from at least one of the polarisers are arranged in the system of the invention so as to generate four fibre optic paths.

Alternatively, the polarisers may be located downstream of the beam splitters, so that the polarisers would be connected to the beam splitters. In this case, the beam splitters would be connected to the output of the variable attenuators.

Four amplitude modulators are then arranged in the system, connected to the processing and control module. Amplitude modulators are configured to modify the amplitude of one or more of the polarised optical pulses based on a selection sent by the processing and control module.

Preferably, the system may comprise a random selector connected to the processing and control module. Thus, in this case, the selection of the amplitude modulators that will apply the attenuation sent by the processing and control module is generated based on a random selection, depending on the received bits, carried out by the random selector.

Preferably, the random selector generates a random bit sequence. From this sequence, one bit is used to choose the encoding basis, i.e. one of the fibre path pairs of the two orthogonal fibre path pairs, and another bit is used to choose one of the paths within the chosen fibre path pair. In addition, in this case, two other bits are used to select the amplitude to be applied with the amplitude modulator from a set of predefined amplitudes. Thus, the generated random bit sequence is split into sets of 4 bits that define a polarisation state at the output of the system and an optical intensity of each pulse generated by the laser(s).

In the case of the 4-laser design, only 2 bits are used, as in this case the intensity of the optical pulses is always the same.

Thus, in the first embodiment of the invention, only a single light source is used and it is possible to select the amplitude of the optical pulse, which is advantageous in terms of safety.

The system of the invention also comprises two orthogonal polarisation combiners, which are configured to receive and orthogonally combine two fibre optic paths. The performed combination provides orthogonally polarised optical pulses at the output of each of the orthogonal polarisation combiners.

The system comprises a first and a second birefringent fibre section, each connected to an orthogonal polarisation combiner. The fibre sections, which are single mode, introduce birefringence, modifying the polarisation. This birefringence depends on mechanical twisting of the fibre, pressure, or thermal variations that vary over time.

Next, two polarisation controllers are arranged, which are connected to the birefringent fibre sections and configured to modify the birefringence axis thereof based on a signal sent by the processing and control module. Thus, in order to modify the birefringence axis of the fibre sections, thus modifying the polarisation states exiting said fibre sections, mechanical action is taken by means of polarisation controllers.

In addition, each of the polarisation controllers allows one of the birefringent fibre sections to be rotated in order to rotate the polarisation of one of the optical pulses travelling therethrough by 45° relative to the other to match the basis of the BB84 protocol.

Preferably, the two polarisation controllers can be motors configured to modify the birefringence axis by applying a voltage to the birefringent fibre sections, which are arranged as a loop of fibres. Alternatively, the polarisation controllers can be piezoelectric devices configured to apply a voltage in different axes on the birefringent fibre sections in order to control polarisation by modifying their birefringence.

The system also comprises a single mode fibre combiner, configured to combine the two fibre sections. In particular, the polarisation controllers are operated so that the four polarisation states resulting from the combined fibre sections match the polarisations of the BB84 protocol, i.e. linear polarisation at 0°, 90°, 45° and -45°.

The system of the invention further comprises a feedback module connected to the processing and control module. The feedback module is configured to receive an optical pulse and transmit the same to the processing and control module.

The processing and control module is configured to determine a control signal based on a measurement of the received optical pulse polarisation state and a target polarisation, and to send the same to the polarisation controllers.

The system of the invention may additionally comprise a collimator, connected to the single mode fibre combiner, which collimates the light to be transmitted in free space.

It may also comprise a beam splitter downstream of the single mode fibre combiner or the collimator. The beam splitter is intended to receive an optical pulse from the single mode fibre combiner and split it into a feedback signal and a transmission signal.

Preferably, the feedback module of the system may further comprise a polarimeter connected to the beam splitter and configured to receive the feedback signal and transmit the same to the processing and control module.

In a second embodiment of the system for encoding and correcting BB84 protocol polarisation states for quantum key distribution of the invention, the system may comprise four light sources configured to generate optical pulses.

The system in this case also comprises a processing and control module, connected to the light sources and configured to modulate the optical pulses generated.

In this embodiment, the system may preferably comprise a random selector connected to the processing and control module. The random selector, in this case, is configured to randomly select and activate one of the four light sources to generate the optical pulses.

Preferably, the random selector generates a random bit sequence. From this sequence, one bit is used to choose the encoding basis, i.e. one of the fibre path pairs of the two orthogonal fibre path pairs, and another bit is used to choose one of the paths within the chosen fibre path pair. In this case, the intensity of the optical pulses is always the same, so no additional bits are used. Thus, the generated random bit sequence is divided into sets of 2 bits that define a polarisation state at the output of the system.

Also, the system comprises four variable attenuators, connected to each of the light sources and to the processing and control module. The variable attenuators are configured to receive optical pulses and apply an attenuation determined by the processing and control module.

In both the first and second embodiments of the invention, it should be noted that the safety of the BB84 protocol depends on the signals being attenuated, so that the probability of emitting pulses of more than one photon is low.

Then, connected to the variable attenuators are four linear polarisers configured to polarise the attenuated optical pulses.

The system then comprises two orthogonal polarisation combiners, configured to receive and orthogonally combine two fibre optic paths, aligning the polarisation axis of one of the inputs orthogonally to that of the other and obtaining orthogonally polarised optical pulses at the output of each of them.

The orthogonal polarisation combiners are connected to a first and a second birefringent fibre section.

The system also comprises two polarisation controllers, connected to the birefringent fibre sections and configured to modify the birefringence axis thereof based on a signal sent by the processing and control module.

The system then comprises a single mode fibre combiner configured to combine the two birefringent fibre sections. As in the first embodiment of the system of the invention, the polarisation controllers are also used here to ensure that the four polarisation states resulting from the combined fibre sections match the polarisations of the BB84 protocol, i.e. linear polarisation at 0°, 90°, 45° and -45°.

The system then comprises a feedback module, connected to the processing and control module and configured to transmit the received optical pulse to the processing and control module.

Moreover, the processing and control module is configured to determine a control signal based on a measurement of the received optical pulse polarisation state and a target polarisation, and to send the same to the polarisation controllers.

The present invention also relates to a method for correcting BB84 protocol polarisation states for quantum key distribution protocol, which makes use of the system according to the first embodiment described above.

In this case, the method comprises the steps of:

i) generating a transmission signal via the processing and control module,

ii) transmitting the transmission signal, by generating an optical pulse using the light sources,

iii) applying an attenuation, determined by the processing and control module, to the optical pulse by means of a variable attenuator,

iv) polarising the attenuated optical pulse transmitted by means of a linear polariser,

v) generating four fibre optic paths by splitting the polarised optical pulse using one or more beam splitters,

vi) selecting one of the amplitude modulators using the processing and control module, and reducing the amplitude of all split optical pulses except the amplitude of the optical pulse sent to the selected amplitude modulator,

vii) orthogonally combining the fibre optic paths two by two, generating two birefringent fibre sections with orthogonal polarisations,

viii) combining the birefringent fibre sections into a single fibre by means of a single mode fibre combiner,

ix) transmitting the unattenuated optical pulse to the processing and control module via the feedback module,

x) determining by means of the processing and control module a Stokes vector of the polarisation state of the transmitted optical pulse,

xi) calculating an angle formed between the Stokes vector of the determined polarisation state and a Stokes vector of a target polarisation,

xii) modifying, by means of polarisation controllers, the birefringence axis of the birefringent fibre sections based on a control signal sent by the processing and control module,

xiii) repeating steps x) to xii) by modifying the control signal to approximate the Stokes vector of the determined polarisation state to the Stokes vector of the target polarisation until the angle formed between these vectors is less than a preset threshold, preferably set between 0.1 and 0.02 radians; and

xiv) repeating steps vi) to xiii) with one of the amplitude modulators not connected to the amplitude modulator selected by means of the orthogonal polarisation combiner.

In steps x) and xi) the polarisation state is measured and the Stokes parameters are obtained. The Stokes parameters $S_1$, $S_2$, and $S_3$, allow the polarisation to be represented as a vector in a three-dimensional Cartesian space. In this way the measured polarisation represented by one vector, which is to be reached to correct the polarisation represented by another vector (target state) is obtained.

In steps xi) to xiii) the angle $\beta$ between the Stokes vector of the determined polarisation state and a Stokes vector of a target polarisation is calculated iteratively in an attempt to reduce it until the target state is reached:

$$Measured\ state\ \rightarrow\ \vec{S}_m = (S_1^{(m)}, S_2^{(m)}, S_3^{(m)})$$

$$Target\ state\ \rightarrow\ \vec{S}_o = (S_1^{(o)}, S_2^{(o)}, S_3^{(o)})$$

$$\beta = arctan\left(\frac{|\vec{S}_m \times \vec{S}_o|}{\vec{S}_m \cdot \vec{S}_o}\right)$$

In step xii) the modification of the birefringence axis is performed for each of the fibre sections separately, so that the states at 0° and 90° are corrected on the one hand, and the states at 45° and -45° on the other hand. It must be taken into account at this step the fact that, being orthogonal pairs of states in each fibre section, if the birefringence of one of the states is corrected, the other must be corrected as well.

In the method of the invention, the polarisation controllers can be motors. In this case, the step of modifying the birefringence axis on the basis of a control signal sent by the processing and control module is carried out by applying mechanical stress to the birefringent fibre sections, which are arranged in a loop of fibres.

In this case, step xiii) is carried out by rotating the birefringence axis of one of the birefringent fibre sections in one direction, so that if the angle between the new polarisation and the target polarisation has increased, the motor is moved in the opposite direction, and if it has decreased, it is moved in the same direction.

This step is repeated until the angle formed between the Stokes vector of the determined polarisation state and the Stokes vector of the target polarisation goes from decreasing to increasing. When this point is reached, the last rotation is undone by returning to the last position of the birefringence axis at which the birefringence angle was reduced.

More preferably, the polarisation controllers can be adaptively adjustable stepper motors. In this way, the processing and control module reduces the step of the motors as the angle formed between the Stokes vector of the determined polarisation state and the Stokes vector of the target polarisation is reduced, increasing the accuracy of matching the determined polarisation to the target polarisation.

In addition, the method may also comprise a number of security measures to prevent possible instances of blocking.

A first safety measure is the angular limits of the motors themselves, as these are from 0° to 170°, which makes it possible for the target state to be outside the operating range (more than 170°). The algorithm saves in memory each time it reaches one of these mechanical limits and in case it reaches all four (two for each motor), it will switch from the target state to the opposite one on the same basis.

Another possible blocking position is that which has been called local minimum, which is a combination of the two motors in which the same sequence of movements is performed continuously, without a significant decrease $\beta$. The reason for this blocking is that there are cases where a movement of the motor means an increase of the angle $\beta$ and then the movement in this direction is discarded, but actually if it had continued to move in this direction, the value would have started to decrease.

A function has been implemented that is able to detect such cases and jump to a random position of the two motors to start the search again. This detection consists of counting the number of times a movement of the motors occurs that does not produce a significant angle variation. In case this account reaches a certain value, it is assumed to be a local minimum.

The control also includes a heat map tool, which allows viewing the path followed by the two motors to reach the target state, as well as their passage through local minima and mechanical limits. To improve performance, prior to the search, the angle between the initial state and the two target states of the same base (vertical and horizontal) is measured. The state to start looking for will be the one at the lowest angle, which will allow for the shortest correction time.

The method of the invention for encoding and correcting polarisation states is performed prior to starting communications using the BB84 protocol. In the event that communications last long enough for the polarisation to vary, intermediate corrections can be made.

The invention also relates to a method for encoding the BB84 protocol polarisation states for quantum key distribution.

In a first embodiment, said method makes use of the device according to the first embodiment of the invention described above. In this case, the method comprises the steps of:

    i) generating a transmission signal via the processing and control module, which represents the polarisation states of a quantum key bit in the BB84 protocol with decoy states,

ii) transmitting the transmission signal, by generating an optical pulse using the light sources,

iii) applying an attenuation, determined by the processing and control module, to the optical pulse by means of a variable attenuator,

iv) polarising the attenuated optical pulse,

v) generating four fibre optic paths by splitting the polarised optical pulse using one or more beam splitters,

vi) randomly selecting one of the amplitude modulators by means of the processing and control module based on a signal sent by a random selector, and reducing the amplitude of all polarised optical pulses except the amplitude of the optical pulse sent to the selected amplitude modulator,

vii) orthogonally combining the fibre optic paths two by two, generating two birefringent fibre sections with orthogonal polarisations,

viii) combining the birefringent fibre sections into a single fibre by means of a single mode fibre combiner,

ix) transmitting the unattenuated optical pulse representative of the quantum key bit in a polarisation state;

x) repeating steps i) to ix) for each bit of the quantum key.

In the step of generating a transmission signal representing a quantum key in the BB84 protocol, preferably, each pair of polarisation states represents a bit equal to 1 and a bit equal to 0, respectively. As discussed above, 4 bits, generated by the random selector, can be used to select the polarisation and amplitude of each optical pulse.

In the second embodiment of the system of the invention, the method for correcting BB84 protocol polarisation states for quantum key distribution of the invention comprises different steps. In particular, in this second embodiment, the method comprises the steps of:

i) generating a transmission signal via the processing and control module,

ii) transmitting the transmission signal, by generating an optical pulse by means of one of the light sources, selected by means of the processing and control module,

iii) transmitting the optical pulse via one of the four fibre optic paths,

iv) applying an attenuation, determined by the processing and control module, to the transmitted optical pulse by means of a variable attenuator,

v) polarising the attenuated optical pulse,

vi) orthogonally combining the fibre optic paths two by two, generating two birefringent fibre sections with orthogonal polarisations,

vii) combining the birefringent fibre sections into a single fibre by means of a single mode fibre combiner,

viii) transmitting the polarised optical pulse to the processing and control module via the feedback module,

x) determining by means of the processing and control module a Stokes vector of the polarisation state of the polarised optical pulse,

x) calculating an angle formed between the Stokes vector of the determined polarisation state and a Stokes vector of a target polarisation,

xi) modifying, by means of polarisation controllers, the birefringence axis of the birefringent fibre sections based on a control signal sent by the processing and control module,

xii) repeating steps ix) to xi) by modifying the control signal to approximate the Stokes vector of the determined polarisation state to the Stokes vector of the target polarisation until the angle formed between these vectors is less than a preset threshold; and

xiii) repeating steps ii) to xiii) for each of the four light sources.

Likewise, the present invention also relates to a method for encoding BB84 protocol polarisation states for quantum key distribution, which makes use of the system according to the second embodiment of the invention, described above. In this case, the method comprises the steps of:

i) generating a transmission signal via the processing and control module, which represents the polarisation states of a quantum key bit in the BB84 protocol with decoy states,

ii) transmitting the transmission signal by generating an optical pulse by means of one of the light sources, randomly selected by the processing and control module based on a signal sent by a random selector,

iii) transmitting the optical pulse via one of the four fibre optic paths,

iv) applying an attenuation, determined by the processing and control module, to the transmitted optical pulse by means of a variable attenuator,

v) polarising the attenuated optical pulse,

vi) orthogonally combining the fibre optic paths two by two, generating two birefringent fibre sections with orthogonal polarisations,

vii) combining the birefringent fibre sections into a single fibre by means of a single mode fibre combiner,

viii) transmitting the unattenuated optical pulse representative of the quantum key bit in a polarisation state;

ix) repeating steps i) to viii) for each bit of the quantum key.

## DESCRIPTION OF THE DRAWINGS

In order to complement the description being made and with the object of helping to better understand the features of the invention, in accordance with a preferred practical exemplary embodiment thereof, said description is accompanied, as an integral part thereof, by a set of drawings where, in an illustrative and non-limiting manner, the following has been represented:

Figure 1 shows a diagram of the different components that make up a first embodiment of the invention.

Figure 2 shows a diagram of the different components that make up a second embodiment of the invention.

## PREFERRED EMBODIMENT OF THE INVENTION

A preferred embodiment of a system and method for encoding and correcting BB84 protocol polarisation states is described below with the aid of the figures.

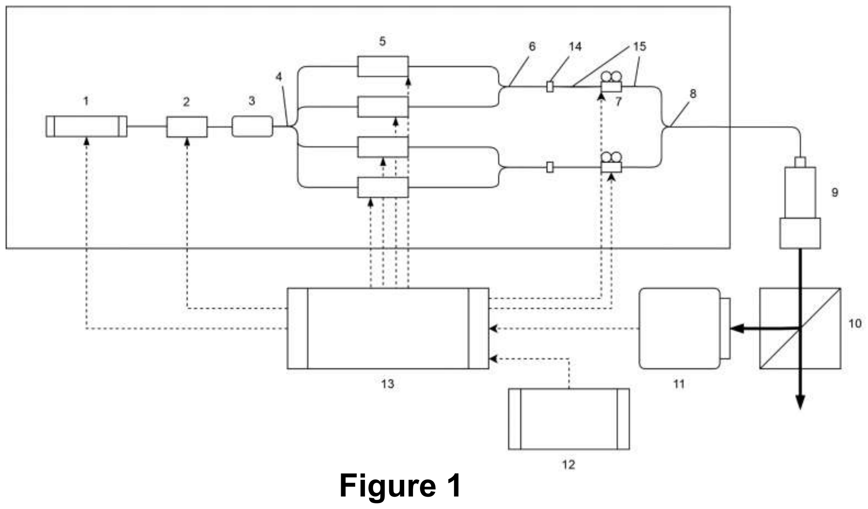

As shown in Figure 1, in a first embodiment, the system comprises a coherent light source (1) for generating the optical pulses. It also comprises a random selector (12), which generates random sequences, and a processing and control module (13), connected to the random selector (12). The processing and control module (13) generates the electronic signal that modulates the optical pulses of the light source (1).

Also part of the system is a variable attenuator (2) through which the light from the source (1) passes to ensure protocol security, controlled by the processing and control module (13). The system further comprises a polariser (3) to obtain polarised light, and a fibre optic beam splitter (4) that splits the signal from the source (1), attenuated by the attenuator (2), and polarised by the polariser (3) into four fibre optic paths.

In each fibre optic path, the system comprises four amplitude modulators (5), one in each fibre path, controlled by the processing and control module (13).

After the amplitude modulators, the system comprises two orthogonal polarisation combiners (6) where the beams are combined in pairs, aligning the polarisation axis of one of the inputs orthogonally to that of the other, so that orthogonal polarisations are obtained at the output.

At the output of each orthogonal polarisation combiner (6) is a single mode fibre section (15), the birefringence axis of which is controlled by vane motors (7) which twist the fibre (15) to correct the polarisation error and introduce a 45° twist at one of the bases to obtain correctly oriented polarisations. The two beams are then combined into one with a single mode fibre combiner (8).

Finally, the system comprises a collimator (9) connected to the output of the single mode fibre combiner (8), a beam splitter (10) that receives the outgoing beam from the collimator (9), and a polarimeter (11) for measuring the polarisation of a beam received from the beam splitter (10). This measurement is passed to the processing and control module (13) to carry out the control of the motors (7).

FC-APC/FC-APC adapters are used to connect the fibre spans together. Adapters (14) range from fibre that maintains polarisation on the left to single mode fibre on the right.

Regarding control, a closed-loop topology with a controller is used. The difference between the actual and the desired polarisation is measured and the difference between the two is used so that, when the motor (7) is rotated in one direction, if the polarisation has increased, the motor moves in the opposite direction, and if it has decreased, it moves in the same direction.

When the difference starts to increase, it returns to the last position where the difference decreased and switches to control the other motor of the polarisation controller. The method is repeated with this motor (7) and iteratively switched to the other motor until the measured difference is below a certain preset threshold.

To reduce the polarisation state correction time, the step of the motor (7) is adaptively modified by reducing it as the measured difference is reduced.

To correct the two states of a base, the modulators (5) are used to attenuate all but one state of the base to be corrected. By performing the check described above, the desired base is corrected, then all but one state of the opposite base is attenuated and the method is repeated.

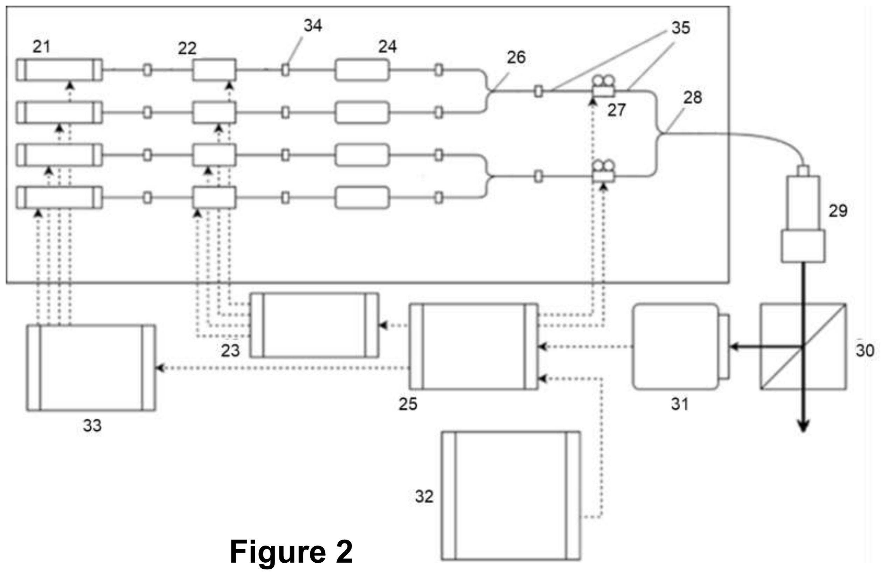

As shown in Figure 2, in a second embodiment, the system comprises four lasers (21) to generate each of the states. It also comprises a random selector (32), which generates random sequences, a processor (25), connected to said random selector (32) and a signal generator (33), from which each of the lasers (21) receives a signal modelled on a sequence from the processor (25) modelled on a generated random number sequence.

The random selector (32) may comprise a random number generator, which generates a bit sequence. From this sequence, 2 bits are used to determine the laser that will emit each pulse, so that with each combination of bits (00, 01, 10, 11) a laser is selected from the 4 available.

Also part of the system are four attenuators (22) through which each beam from the lasers (21) passes to ensure protocol security, a digital-to-analogue converter board (23) which controls the attenuators (22) and is in turn controlled by the processor (25), and four polarisers (24) connected to the output of the attenuators (22) to obtain polarised light.

At the output of the polarisers (24), the system comprises two orthogonal polarisation combiners (26) where the beams are combined in pairs, aligning the polarisation axis of one of the inputs orthogonally to that of the other, so that orthogonal polarisations are obtained at their output.

At the output of each orthogonal polarisation combiner (26) is a single mode fibre section (35), the birefringence axis of which is controlled by vane motors (27) which twist the fibre (35) to correct the polarisation error and introduce a 45° twist at one of the bases to obtain correctly oriented polarisations. The two beams are then combined into one with a single mode fibre combiner (28).

Finally, the system comprises a collimator (29) connected to the output of the single mode fibre combiner (28), a beam splitter (30) that receives the outgoing beam from the collimator (29), and a polarimeter (31) for measuring the polarisation of a beam received from the beam splitter (30). This measurement is passed to the processor (25) to carry out the control of the motors (27).

FC-APC/FC-APC adapters (34) are used to connect the fibre spans together.

As in the previous embodiment, a closed-loop topology with a controller is used. The difference between the actual and the desired polarisation is measured and the difference between the two is used so that, when the motor (27) is rotated in one direction, if the polarisation has increased, the motor moves in the opposite direction, and if it has decreased, it moves in the same direction.

When the difference starts to increase, it returns to the last position where the difference decreased and switches to control the other motor of the polarisation controller. The method is repeated with this motor (27) and iteratively switched to the other motor until the measured difference is below a certain preset threshold.

To reduce the polarisation state correction time, the step of the motor (27) is adaptively modified by reducing it as the measured difference is reduced.

After correcting this first state, one of the bases will be corrected, so all lasers will be attenuated except any one of the lasers in the base that has not been corrected. Repeating the same method as for the previous base, all the states are obtained.

These embodiments may also implement various security measures. For example, an algorithm that has a number of measures to avoid possible cases of blocking due to angular limits of the motors (27) and local minima.

In addition, it can make use of a heat mapping tool to visualise the path taken to reach the target state, allowing the user to see how the controller module has behaved.

**Claims**

1. A system for encoding and correcting BB84 protocol polarisation states for quantum key distribution, comprising:

   - one or more light sources (1) configured to generate optical pulses,
   - a processing and control module (13), connected to the light sources (1) and configured to modulate the optical pulses generated,
   - one or more variable attenuators (2), connected to each of the light sources (1) and to the processing and control module (13), configured to receive optical pulses and apply a previously determined attenuation by the processing and control module (13),
   - one or more linear polarisers (3) configured to polarise the attenuated optical pulses,
   - one or more fibre optic beam splitters (4) configured to split the attenuated optical pulses coming from at least one of the polarisers (3) or from the one or more variable attenuators (2), and to generate four fibre optic paths,
   - four amplitude modulators (5), connected to the processing and control module (13), configured to modify the amplitude of one or more of the polarised optical pulses based on a selection sent by the processing and control module (13),
   - two orthogonal polarisation combiners (6), each configured to receive and orthogonally combine two fibre optic paths,
   - a first and second birefringent fibre section (15), each connected to an orthogonal polarisation combiner (6),
   - two polarisation controllers (7), linked to the birefringent fibre sections (15), configured to modify the birefringence axis of the birefringent fibre sections (15) based on a signal sent by the processing and control module (13),
   - a single mode fibre combiner (8), which combines the two fibre sections (15);
   and
   - a feedback module, connected to the processing and control module (13), and configured to transmit a received optical pulse to said processing and control module (13),

   wherein the linear polarisers (3) may be connected to the variable attenuators (2) or to the beam splitters (4), and wherein the processing and control module (13) is configured to determine a control signal for the polarisation controllers (7) based on a measurement of the polarisation state of the received optical pulse, and a target polarisation.

2. The device of claim 1, further comprising a random selector (12), connected to the processing and control module (13) and configured to randomly select the amplitude modulators (5) to apply an attenuation.

3. The device according to any of claims 1 to 2, further comprising a collimator (9), connected to the single mode fibre combiner (8).

**4.** The device according to any of claims 1 to 3, further comprising a beam splitter (10) intended for receiving an optical pulse from the single mode fibre combiner (8) and splitting it into a feedback signal and a transmission signal.

**5.** The system according to claim 4, wherein the feedback module further comprises a polarimeter (11) connected to the beam splitter (10) and configured to receive the feedback signal and to transmit it to the processing and control module (13).

**6.** The device according to any of claims 1 to 5, wherein the two polarisation controllers (7) are motors configured to modify the birefringence axis by applying a voltage to the birefringent fibre sections (16) arranged as a loop of fibres or are piezoelectric devices configured to apply a voltage on the birefringent fibre sections (16).

**7.** A system for encoding and correcting BB84 protocol polarisation states for quantum key distribution, comprising:

- four light sources (21) configured to generate optical pulses,
- a processing and control module (25), connected to the light sources (21) and configured to modulate the optical pulses generated,
- four variable attenuators (22), connected to each of the light sources (21) and the processing and control module (25), configured to receive optical pulses and apply an attenuation determined by the processing and control module (25),
- four linear polarisers (24), connected to the variable attenuators (22), and configured to polarise the attenuated optical pulses,
- two orthogonal polarisation combiners (26), configured to receive and orthogonally combine two fibre optic paths,
- a first and second birefringent fibre section (35), each connected to an orthogonal polarisation combiner (26),
- two polarisation controllers (27), linked to the birefringent fibre sections (35), configured to modify the birefringence axis of the birefringent fibre sections (35) based on a signal sent by the processing and control module (25),
- a single mode fibre combiner (28) combining the two fibre sections (35); and
- a feedback module, connected to the processing and control module (25), and configured to transmit a received optical pulse to said processing and control module (13), wherein the processing and control module (25) is configured to determine a control signal based on a measurement of the polarisation state of the received optical pulse and a target polarisation and send it to the polarisation controllers (27).

**8.** The system according to claim 7, further comprising a random selector (32), connected to the processing and control module (25), configured to randomly select and activate one of the four light sources (21) to generate the optical pulses.

**9.** A method for correcting BB84 protocol polarisation states for quantum key distribution, which makes use of the system according to any of claims 1 to 6, comprising the steps of:

i) generating a transmission signal via the processing and control module (13),
ii) transmitting the transmission signal, by generating an optical pulse by means of the light sources (1),
iii) applying an attenuation, determined by the processing and control module (13), to the optical pulse by means of a variable attenuator (2),
iv) polarising the attenuated optical pulse transmitted by means of a linear polariser (3),
v) generating four fibre optic paths by splitting the polarised optical pulse using one or more beam splitters (4),
vi) selecting one of the amplitude modulators (5) using the processing and control module (13), and reducing the amplitude of all split optical pulses except the amplitude of the optical pulse sent to the selected amplitude modulator (5),
vii) orthogonally combining the fibre optic paths two by two, generating two birefringent fibre sections with orthogonal polarisations,
viii) combining the birefringent fibre sections (15) into a single fibre by means of a single mode fibre combiner (8),
ix) transmitting the unattenuated optical pulse to the processing and control module (13) via the feedback module (11),
x) determining by means of the processing and control module (13) a Stokes vector of the polarisation state of the transmitted optical pulse,
xi) calculating an angle formed between the Stokes vector of the determined polarisation state and a Stokes vector of a target polarisation,
xii) modifying, by means of polarisation controllers (7), the birefringence axis of the birefringent fibre sections (15) based on a control signal sent by the processing and control module (13),
xiii) repeating steps x) to xii) by modifying the control signal to approximate the Stokes vector of the determined polarisation state to the Stokes vector of the target polarisation until the angle formed between these vectors is less than a preset threshold, preferably set between 0.1 and 0.02 radians; and

xiv) repeating steps vi) to xiii) with one of the amplitude modulators (5) not connected to the amplitude modulator (5) selected by means of the orthogonal polarisation combiner (6).

10. The method of claim 9, wherein the polarisation controllers (7) are motors and the step of modifying the birefringence axis based on a control signal sent by the processing and control module (13) is performed by applying a rotation on the birefringent fibre sections (16) arranged as a loop of fibres.

11. The method of claim 10, wherein the step of repeating steps x) to xii) by modifying the control signal is carried out by rotating the birefringence axis of one of the birefringent fibre sections (16) in the same direction until the angle formed between the Stokes vector of the determined polarisation state and the Stokes vector of the target polarisation changes from decreasing to increasing, and back to the last position of the birefringence axis at which said angle was reduced.

12. The method according to any of claims 10 to 11, wherein the polarisation controllers (7) are adaptively adjustable stepper motors, and wherein the processing and control module (13) reduces the step of the motors as the angle formed between the Stokes vector of the determined polarisation state and the Stokes vector of the target polarisation is reduced.

13. The method according to any of claims 9 to 12, wherein the preset threshold is set between 0.1 and 0.02 radians.

14. A method for correcting BB84 protocol polarisation states for quantum key distribution, which makes use of the system according to any of claims 7 to 8, comprising the steps of:

i) generating a transmission signal via the processing and control module (25),
ii) transmitting the transmission signal, by generating an optical pulse by means of one of the light sources (21), selected by means of the processing and control module (25),
iii) transmitting the optical pulse via one of the four fibre optic paths,
iv) applying an attenuation, determined by the processing and control module (25), to the transmitted optical pulse by means of a variable attenuator (22),
v) polarising the attenuated optical pulse,
vi) orthogonally combining the fibre optic paths two by two, generating two birefringent fibre sections (35) with orthogonal polarisations,

vii) combining the birefringent fibre sections (35) into a single fibre by means of a single mode fibre combiner (28),
viii) transmitting the polarised optical pulse to the processing and control module (25) via the feedback module (31),
x) determining by means of the processing and control module (25) a Stokes vector of the polarisation state of the polarised optical pulse,
x) calculating an angle formed between the Stokes vector of the determined polarisation state and a Stokes vector of a target polarisation,
xi) modifying, by means of polarisation controllers (27), the birefringence axis of the birefringent fibre sections based on a control signal sent by the processing and control module (25),
xii) repeating steps ix) to xi) by modifying the control signal to approximate the Stokes vector of the determined polarisation state to the Stokes vector of the target polarisation until the angle formed between these vectors is less than a preset threshold; and
xiii) repeating steps ii) to xii) for each of the four light sources (21).

15. A method for correcting BB84 protocol polarisation states for quantum key distribution, which makes use of the system according to any of claims 2 to 6, comprising the steps of:

i) generating a transmission signal via the processing and control module (13), which represents the polarisation states of a quantum key bit in the BB84 protocol with decoy states,
ii) transmitting the transmission signal, by generating an optical pulse by means of the light sources (1),
iii) applying an attenuation, determined by the processing and control module (13), to the optical pulse by means of a variable attenuator (2),
iv) polarising the attenuated optical pulse,
v) generating four fibre optic paths by splitting the polarised optical pulse using one or more beam splitters (3),
vi) randomly selecting one of the amplitude modulators (5) by means of the processing and control module (13) based on a signal sent by a random selector (12), and reducing the amplitude of all polarised optical pulses except the amplitude of the optical pulse sent to the amplitude modulator (5) selected,
vii) orthogonally combining the fibre optic paths two by two, generating two birefringent fibre sections (15) with orthogonal polarisations,
viii) combining the birefringent fibre sections (15) into a single fibre by means of a single mode fibre combiner (8),

ix) transmitting the unattenuated optical pulse representative of the quantum key bit in a polarisation state; and

x) repeating steps i) to ix) for each bit of the quantum key.

16. A method for correcting BB84 protocol polarisation states for quantum key distribution, which makes use of the system according to claim 8, comprising the steps of:

i) generating a transmission signal via the processing and control module (25), which represents the polarisation states of a quantum key bit in the BB84 protocol with decoy states,

ii) transmitting the transmission signal by generating an optical pulse by means of one of the light sources (21), randomly selected by the processing and control module (25) based on a signal sent by a random selector (32),

iii) transmitting the optical pulse via one of the four fibre optic paths,

iv) applying an attenuation, determined by the processing and control module (25), to the transmitted optical pulse by means of a variable attenuator (22),

v) polarising the attenuated optical pulse,

vi) orthogonally combining the fibre optic paths two by two, generating two birefringent fibre sections (35) with orthogonal polarisations,

vii) combining the birefringent fibre sections (35) into a single fibre by means of a single mode fibre combiner (28),

viii) transmitting the unattenuated optical pulse representative of the quantum key bit in a polarisation state; and

ix) repeating steps i) to viii) for each bit of the quantum key.

**Figure 1**

**Figure 2**

# INTERNATIONAL SEARCH REPORT

| International application No. |
|---|
| PCT/ES2023/070757 |

**A. CLASSIFICATION OF SUBJECT MATTER**

*H04L9/08* (2006.01)
*G01J4/00* (2006.01)
According to International Patent Classification (IPC) or to both national classification and IPC

**B. FIELDS SEARCHED**

Minimum documentation searched (classification system followed by classification symbols)
H04L, G01J

Documentation searched other than minimum documentation to the extent that such documents are included in the fields searched

Electronic data base consulted during the international search (name of data base and, where practicable, search terms used)

EPODOC, INVENES, WPI, NPL, XPIEE, XPI3E

**C. DOCUMENTS CONSIDERED TO BE RELEVANT**

| Category* | Citation of document, with indication, where appropriate, of the relevant passages | Relevant to claim No. |
|---|---|---|
| X | ZHOU HUA et al... "Quantum key distribution with silent active polarization compensation without a reference optical beam" 2015 International Conference On Wireless Communications & Signal Processing (wcsp), 15/10/2015 Ieee, ages 1 - 4, <DOI: 10.1109/WCSP.2015.7341193> the whole document | 1-16 |
| A | | 9-16 |
| A | SHI, YICHENG, et al. "Fibre polarisation state compensation in entanglement-based quantum key distribution.". Optics Express 29.23 (2021): 19/07/2021 <URL: https://arxiv.org/abs/2107.07654> the whole document | 1-16 |
| A | US 2007223078 A1 (YAO X S ET AL.) 27/09/2007, the whole document | 1-16 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 05/03/2024 | **(11/03/2024)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | M. Muñoz Sanchez Telephone No. 913495348 |

Form PCT/ISA/210 (second sheet) (July 2022)

## INTERNATIONAL SEARCH REPORT

| International application No. |
| --- |
| PCT/ES2023/070757 |

| C (continuation). | | DOCUMENTS CONSIDERED TO BE RELEVANT | |
| --- | --- | --- | --- |
| Category * | Citation of documents, with indication, where appropriate, of the relevant passages | | Relevant to claim No. |
| A | CN 109039594 A (QUANTUMCTEK CO LTD) 18/12/2018,<br>the whole document | | 1-16 |
| A | ARTEAGA-DIAZ PABLO et al. "Correcting Polarization Degradation in Free-Space QKD Systems" 2020 22nd International Conference On Transparent Optical Networks (icton), 19/07/2020 Ieee pages 1 - 4, <DOI: 10.1109/ICTON51198.2020.9203359><br>the whole document | | 1, 7 |
| A | CN 203761414U U (UNIV HARBIN SCIENCE & TECH) 06/08/2014,<br>the whole document | | 1, 7 |

Form PCT/ISA/210 (continuation of second sheet) (July 2022)

## INTERNATIONAL SEARCH REPORT

Information on patent family members

International application No.

PCT/ES2023/070757

| Patent document cited in the search report | Publication date | Patent family member(s) | Publication date |
|---|---|---|---|
| US2007223078 A1 | 27.09.2007 | US2009028565 A1 | 29.01.2009 |
| | | US8000610 B2 | 16.08.2011 |
| | | US2005200941 A1 | 15.09.2005 |
| | | US7027198 B2 | 11.04.2006 |
| | | US2005201751 A1 | 15.09.2005 |
| | | US7391977 B2 | 24.06.2008 |
| | | US2008030839 A1 | 07.02.2008 |
| | | US7466471 B2 | 16.12.2008 |
| | | US7436569 B2 | 14.10.2008 |
| | | US2006023987 A1 | 02.02.2006 |
| | | US7218436 B2 | 15.05.2007 |
| | | CN1766725 A | 03.05.2006 |
| | | CN100432819C C | 12.11.2008 |
| CN109039594 A | 18.12.2018 | NONE | |
| CN203761414U U | 06.08.2014 | NONE | |

Form PCT/ISA/210 (patent family annex) (July 2022)